# EUROPEAN PATENT APPLICATION

(11) **EP 2 533 033 A1**
(43) Date of publication of application: **12.12.2012**
(21) Application number: 10845340.8
(22) Date of filing: 03.02.2010
(51) Int. Cl.: G01N 21/64

(54) **DEVICE FOR ANALYZING LUMINESCENT BIO-MICROCHIPS**

(71) Applicant: UCHREZHDENIE ROSSIISKOI AKADEMII NAUK INSTITUT MOLEKULYARNOI BIOLOGII IM. V.A. ENGELGARDTA RAN (IMB RAN), Moscow 119991 (RU)
(72) Inventor: BARSKY, Viktor Evgenievich, Moscow 115167 (RU); EGOROV, Egor Evgenievich, Moscow 125464 (RU); ZASEDATELEV, Alexandr Sergeevich, Moscow 117418 (RU)
(74) Representative: HOFFMANN EITLE
(86) International application number: PCT/RU2010/000040
(87) International publication number: WO 2011/096835

(57) **Abstract**

The invention relates to a device for analyzing luminescent bio-microchips that comprises a holder (1) for a specimen (2), means (3) for illuminating the same, an optical system with a filter (6) for separating the luminescence light from the specimen, and means (7) for fixing an image of the specimen. The means (3) for illuminating the specimen comprises laser sources (16, 17, 18) for exciting a fluorescent radiation, and an optical fiber system for distributing the laser radiation. According to the invention, the optical system includes two objectives (4, 5) facing each other, and the object holder (1) is capable of positioning the specimen to be analyzed on the surface thereof oriented towards the optical system, while the laser sources (16, 17, 18) for exciting a fluorescent radiation include at least two lasers (16, 18) having different wavelengths, the filter (6) being a multi-layered one.

## Description

### Technical Field

The invention relates to a device for analyzing luminescent bio-microchips, in particular, for serial analyzing one-type biological microchips in the light of luminescence thereof to display an image on a digital camera followed by image processing by means of a computer program.

### Background Art

To produce images of luminescent objects, in particular, luminescent biological microchips (hereinafter referred to as biochips), two types of apparatuses are used. In one of them, an image is produced by scanning an object with a thread of light or a luminous slot by exciting luminescence of a small area of an illuminated object. Then, a full image of the object is reproduced by computer processing of individual signals. Such a type of apparatuses is called as a confocal luminescent microscope or for analyzing large surfaces - a scanator. One of embodiments of such a type of apparatuses is presented in US6329661 B1.

In apparatuses of other type the luminescence excitation of an object is produced by illuminating an entire object at once, and a luminescent image of an object is produced by constructing this image on a digital camera matrix. Such a type of apparatuses is called a wide-field luminescent analyzer (WFLA).

The reproduction of an image is performed from multiple individual dimensions for any scanning of an object. An advantage of scanators is their higher sensibility compared to WFLA. This is mainly related to that the luminescence of a minor portion of an object only is illuminated in each moment and, accordingly, measured by beam scanning, therefore, the background level appearing due to diffusion of an exciting beam is much less, from whence the influence of luminescence of adjacent sections reduces. However, a sensibility-associated disadvantage of scanators is a much longer analysis time, an object is scanned ether in spots, or by a narrow slot. Moreover, scanators must use movable mechanical elements, that is, the presence of motors, drives, precision sliding surfaces, etc. conjugate to a signal pickup system is required certainly thereby increasing the cost of an apparatus and reducing the resource thereof.

A comparison of absolute sensibility of detection of cells with an amount of fluorochrome by means of commercial scanators (for example, the Packard Instruments) and by means of biochip analyzers working on the principle of WFLA has found that the biochip analyzers are about 3-5 times exceeded in sensibility by scanators. The difference in sensibility of apparatuses working on principles of a scanators or WFLA may be essential when working with very weak signals, for example, with very weakly luminescent objects. Expression biochips, for example, may be such objects. However, this difference in sensibility is not essential for working with more strongly luminescent objects, for example, hybridization third-dimensional biochips, inasmuch as in this case signals are sufficiently great, and the operational efficiency of the apparatus is not determined by its absolute sensibility.

In actual practice of biochips, an advantage of WFLA is the rapidness of achieving a result allowing thereby performing hundreds of measurements per production shift. This is an urgent problem, for example, for analyzing by means of biochips large population groups (risk groups) or identifying DNA of the tuberculosis agent in patients in a tuberculosis dispensary.

Known is a device for analyzing luminescent biological microchips described in US6620623 working on the principle of WFLA. This device comprises a holder, means for illuminating the same comprising laser sources for exciting a fluorescent radiation and an optical fiber system for distributing the laser radiation, an optical system with a filter for separating the luminescence light from the specimen, and means for fixing an image of the specimen on an information receiver as a CCD camera. The light from a source for exciting radiation by means of optical fibers positioned to make a fan is supplied to the faces of a glass substrate and advanced in the thickness of this substrate reflecting from the border of glass and air in consequence of a difference in the air and glass refraction indices according to the total internal reflection law. In the places where on the glass surface there are some objects having a higher refraction index than the refraction index of air, light goes out of the glass and excites the luminescence of a dye present in said objects. The optical scheme of the apparatus concentrates collects an image of the glass surface in the light of luminescence and directs this image to the matrix of a CCD camera.

However, this device works only with chips positioned on a (transparent) glass substrate and cannot work with chips positioned on an opaque substrate. This very strongly restricts the field of use of the apparatus, inasmuch as a lot of firms manufacture chips positioned on an opaque substrate. The other disadvantage of the apparatus is the fact that inasmuch as the light from a radiation source dissipates all over the glass, a very large area is illuminated (for a specimen glass 18,75 cm²). At the same time, a diagnostic chip often occupies an area of less than 1 cm² (for example, standard diagnostic chips manufactured by the Aconni company occupy an area of 20-50 mm², that is, less approximately by a factor 50-100). This results in superfluous power consumption.

When using this luminiscence excitation system all objects on the surface of glass are illuminated. This inevitably results in increasing the background level, and as a consequence, in reducing the sensibility of this device. Furthermore, the use of glass as a substrate has some disadvantages. Glass is a fragile material and can be broken thereby cutting operator's hands. Common glass has non-uniformities of the structure resulting in a lot of defective products. In case of routine analysis, the use of chemically processed glass as a substrate will essentially increase the cost of biochips manufactured.

The problem of the invention is to develop a device for analyzing luminescent bio-microchips allowing performing a serial analysis of a great number of one-type biological microchips having a sensibility sufficient not to readjust the optical system and high reliability with reduced energy demands and dimensions compared to the known devices. Moreover, this device shall make it possible to work using substrates whose material is different from glass, for example, metal or non-fluorescent plastic substrates.

### Summary of Invention

Said problem is solved by that in a device for analyzing luminescent bio-microchips comprising a holder, means for illuminating the same comprising laser sources for exciting a fluorescent radiation and an optical fiber system for distributing the laser radiation, an optical system with a filter for separating the luminescence light from the specimen and means for fixing an image of the specimen according to the invention, the optical system includes two objectives facing each other, and the object holder includes a supporting surface located in focal plane of the objective approximate to the object holder, while the laser sources for exciting a fluorescent radiation include at least two lasers having different wavelengths, the filter being a multi-layered one.

A scheme with two objectives facing each other has the following merits:
1. It allows entirely using the objective aperture (when using one objective an angle at which the radiation of an object is collected reduces not less than twice, and the power of the radiation collected - not less than four times).
2. The objectives, in particular, photographic ones give a minimum distortion and falloff with minor vision fields determined by the sizes of a biochip.
3. If required to pass on to another magnification, one objective is merely replaced by another one having another focus offset without changing the construction of the whole device.
4. Standard camera objectives are often planapochromatic. When working in a visible spectrum focusing does not actually vary with changing a wave length.

A multi-layered filter may be positioned both between the means for fixing an image and the objective approximate thereto, as well as between the objectives. The filter is preferably interferential.

A device for fixing an image preferably includes a CCD or CMOS matrix.

A means for illuminating an object preferably includes a ring bearing comprising equally circumferentially spaced fiber ends of the fiber optical laser radiation distribution system angularly oriented to the axis of this ring bearing. The ring bearing may be mounted on a frame of the objective approximate to the object holder.

The fiber optical system may include a few fiber bundles, so that one bundle of fibers corresponds to each laser, while each bundle is divided on the side of the object into separate fibers such that the fiber ends from different lasers are positioned in a circumferential direction of the ring bearing and directed towards the object to be analyzed when it is mounted in a holder.

The laser sources for exciting a fluorescent radiation preferably comprise three lasers, wherein ether two of them have an equal wavelength, or all lasers have different wavelengths.

The objectives are preferably equal. When using two equal objectives facing each other, chromatic and spherical aberrations do not intensify, but compensate one other.

Besides, the object holder may include three mutually perpendicular supporting planes and three elastic members to force the specimen against these planes.

### Brief Description of Drawings

Fig. 1 schematically shows a device for analyzing luminescent biological microchips in accordance with the present invention, partial section side view;
Fig. 2 schematically shows a specimen holder, top view;
Fig. 3 schematically shows an A-A cross section in fig. 1.

### Best Mode for Carrying out the Invention

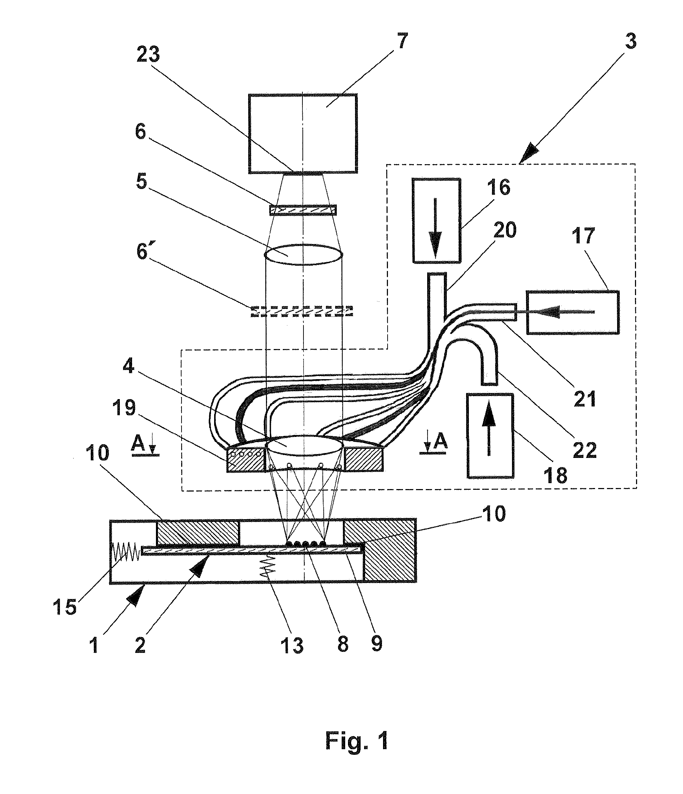

As shown in fig. 1, a device for analyzing luminescent biological microchips according to the invention comprises a holder 1 for a specimen 2, means 3 for illuminating the same, an optical system comprising two objectives 4, 5 and a two-layered filter 6 and means 7 for fixing an image of the specimen. Further, by specimen 2 a luminescent biological microchip 8 (biochip) positioned on a substrate 9 is meant.

The holder 1 for the specimen 2 is designed for precisely positioning the specimen in the device. Inasmuch as in the specimen 2 the biochip is positioned on the upper surface of the substrate that may have a different thickness, it is necessary for each substrate to provide getting the biochip in the focus of the optical system.

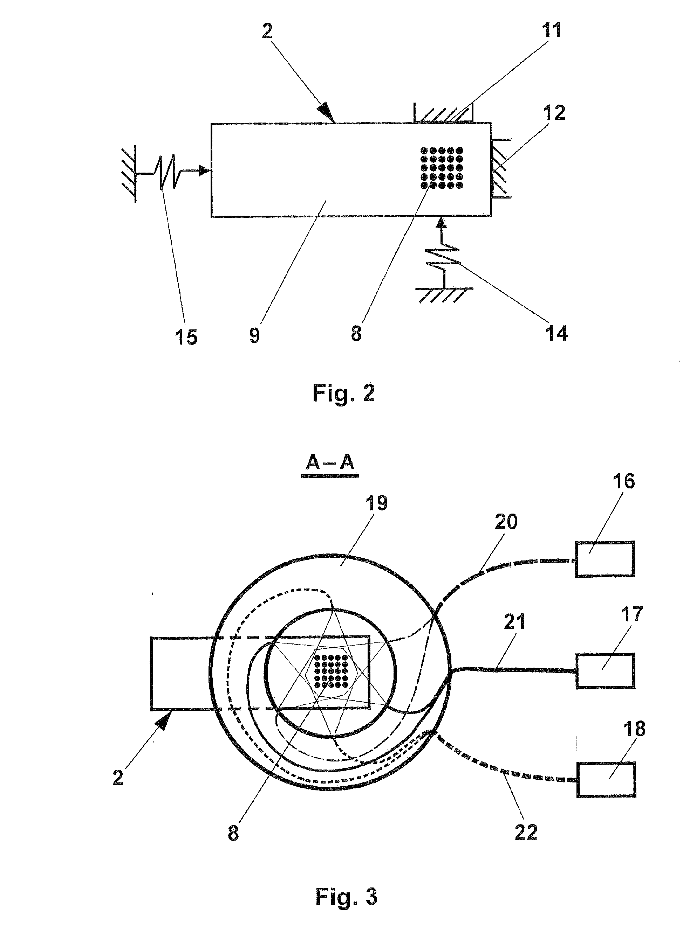

For this the holder 1 for the specimen 2 (fig. 2) three mutually perpendicular supporting planes: plane 10 (fig. 1) lying in the focal plane of the objective 4 approximate the holder 1 and two other planes 11 and 12. Moreover, the holder 1 includes three elastic members 13, 14 (fig. 1) and 15 (fig. 2) to force the specimen against these planes, one of the supporting planes being positioned in the focal plane of the objective approximate to the object holder. Such a configuration of the holder 1 allows providing positioning the specimen in three dimensions so that the specimen is mounted in the same position and withdrawn by a simple motion of hand requiring no additional height adjustments. Besides, mounting and withdrawal time for the specimen greatly reduces. While implementing such a procedure for positioning the specimen the objective always focused on the plane of the upper surface of the biochip, and the location of biochip cells in the field of the objective vision was reproduced with an accuracy of at least ±20µm.

The means 3 for illuminating the specimen comprises laser sources 16, 17 and 18 for exciting a fluorescent radiation (further lasers 16, 17 and 18), and an optical fiber system for distributing the laser radiation.

When using lasers for illuminating the diameter of the outgoing beam light should be considerably increased. It should be taken into account that in the cross-section a light beam is strongly inhomogeneous. It has lateral brightness distribution characteristic of each laser, that is, in real laser beams the cross-direction brightness is of a strongly inhomogeneous nature, which is caused by a series of natural reasons. In this connection, one of the main problems solved by the device according to the invention is achieving the maximum uniform illumination of different sites of the biochip.

It has been found that illuminating an object by a fiber-optic ring light is best of all.

In this accordance the means 4 for illuminating an object in accordance with the present invention comprises lasers 16, 17 and 18, a fiber optical laser radiation distribution system and a ring bearing 19.

The fiber optical system includes a few bundles 20-22 of fibers, so that one bundle 20-22 of fibers corresponds to each laser, respectively.

As schematically shown in fig. 3, the faces of the fiber bundles 20-22 are illuminated by lasers 16-18. Each fiber bundle 20-22 is bifurcate, the bifurcate ends of fibers from different lasers being alternately positioned in a circumferential direction of the ring bearing 19 and oriented towards the specimen 2 to be analyzed when it is mounted in the holder 1.

Although in fig. 3 it is shown that the ends of fiber bundles on the side going to the object are bifurcate, however preferably each fiber bundle is broken up into a few, for example, 8 branches and insert into the ring bearing 19 having 24 openings, respectively, each 15° through which the illumination of the object goes from all sides at an angle to the object and the optical axis of the device. Thus, 24 branches of optical fibers are directed to the object, 8 from each laser. The ring bearing 19 is horizontally mounted on the frame (it is not conventionally shown) of the lower objective 4 in such a manner that all branches of light guides illuminate the biochip 8 positioned in the focal plane of the objective 4.

The ring bearing 19 is preferably made from a metal and consists of a few portions mating in the assembly (it is not conventionally shown) with preliminary made therein relevant openings and canals in which fibers are located.

In the device two wavelengths are preferably used: through two bundles of fibers illumination goes with two lasers 16 and 17 having a wavelength of 655 nm, and through one fiber - with laser 18 having a wavelength of 632 nm.

As dyes in the biochip fluorochromes Cy3 (excitation in the vicinity of 530 nm, radiation 540 nm) and Cy5 (excitation in the vicinity of 640 nm, radiation in the vicinity of 660 nm) are used.

For Cy3 optimal are solid-state lasers having a wavelength of 532 nm, for example, lasers PGL-FS-532nm-20mW CW by the Changchun New Industries Optoelectronics Tech. Co., Ltd (http://www.cnilaser.com).

For Cy5 optimal are lasers having a wavelength of 655 nm, for example, VM65014 by the Midwest Laser Products, USA.

Where it is necessary to analyze with another wavelength (for example, using a more wavelength dye, one of the two branches used for red color may be involved.

As shown above, the optical system comprises two objectives facing each other and a two-layered interferential filter 6 (when using lasers 16-18 with two wavelengths the Omega Opticals USA filter XF3066 was used). The lower objective 4 collects the radiation of the biochip and directs it to the upper objective 5, which in turn constructs an image of the biochip on the surface of the CCD or CMOS matrix 23 of the device 7 for fixing an image of the specimen provided as a digital camera.

Theoretically, an image of the object onto the camera matrix may be projected by any optical system, inasmuch as to determine the light intensity of individual cells the computer program for analyzing the image has no use for high regular quality disposition of cells. Moreover, even the quality of image may be not very good, distortion and falloff are admissible. Computer processing may help taking away all these distortions, however, this greatly reduces a dynamic range of the processed image signals narrowing thereby the field of use of the device, in addition, a user often wants to see a good image of the biochip, and only sufficiently good optics may give this to him.

A scheme with two equal objectives 4 and 5 facing each other is optimal for producing a good undistorted image of the biochip. As an example, two photographic objectives having focal distances 55 mm, for example, Nikkor 50/1.5 may be used. The object (biochip) is positioned in the back focal plane of the first objective 4 (as if in the place of a matrix in a digital camera). This objective 4 collects the image of the biochip in the light of its luminescence and sends it as a parallel beam. The second objective 5 is mounted towards the first one, the distance between them is not great, inasmuch as the beams coming from the first objective move in parallel. The second objective 5 collects all beams after the first objective 4 and constructs an image in its back focal plane. In this plane there stands a matrix 23 of the digital camera of the means 7 for fixing an image of the specimen. If the objectives are equal, an image is projected on the camera matrix at a scale of 1 in 1. The field size therein comes up to the size of the matrix. The filed size varies automatically as the matrix sizes vary. If the objectives 4 and 5 are not equal (have a different focal distance), an image with magnification or reduction corresponding to the ratio of focal distances of the objectives is focused on the camera matrix.

As shown above, the scheme having two photographic objectives facing each other have the following advantages.
1. It allows entirely using the objective aperture.
2. Objectives, in particular, photographic ones give a minimum distortion and falloff with minor vision fields determined by the matrix sizes of the digital camera.
3. If required to pass on to another magnification, one objective is merely replaced by another one having a different focal distance without changing the construction of the entire device.
4. Standard photographic objectives are planapochromatic. When working in a visible and remote red spectra pectrum focusing does not actually vary with changing a wavelength.
5. When using two equal objectives facing each other, chromatic and spherical aberrations do not intensify, but compensate one other.

The objectives having a less focal distance require a less distance as far as the objective being thereby constructively inconvenient to produce uniform illumination. Objectives with an increased focal distance enlarge the size of the device.

Inasmuch as the illumination of biochips and excitation of their luminescence is produced by means of lasers having a very narrow spectral emission range, it is not required to apply exciting filters. Only suppression filters cutting off exciting light and the digital cameras located between the object and the matrix of the digital camera are needed. Interferential filters are theoretically supposed to put in parallel light, that is, between the objectives, however, in this case their diameter should be large enough to cover all the objective aperture. It has been found that the interferential filters 6 may be mounted directly before a CDD or CMOS matrix of the camera without essentially worsening the signal/background ratio.

Nevertheless, s a variant, the filter 6' (it is shown by a dashed line in fig, 1) may be mounted also between the objectives 4 and 5.

In the embodiment of the invention as described the interferential filter 6 (6') is two-layered (for wavelengths 532 nm and 655 nm), however, where it is necessary to analyze with another wavelength (for example, using a more wavelength dye of CY7 type) the filter 6 (6') may be three-layered.

In the device according to the present invention there may be used, for example, two-layered Omega Opticals USA filters XF3066 that absorb in laser radiation regions (532 nm and 655 nm) and transmit in fluorescence regions of dyes CY3 and Cy5.

Using a two-layered (multi-layered) filter allows passing on from an analysis with one dye to another only by switching on or off relevant lasers without mechanically moving the optical components of the apparatus.

In the device, in accordance with the present invention, an object to be analyzed (biochip) is located on the surface of a substrate matching the size of standard preparation glass for 25x75 mm microscopes. This size is rather convenient for the very various objects, in particular, biological microchips, inasmuch as it allows placing a lot of cells (within thousands) and at the same time, it corresponds to the hand (fingers) sizes, which is convenient for a user.

## Claims

1. A device for analyzing luminescent biological microchips comprising a holder, means for illuminating the same comprising laser sources for exciting a fluorescent radiation and an optical fiber system for distributing the laser radiation, an optical system with a filter for separating the luminescence light from the specimen, and means for fixing an image of the specimen **characterized by** that the optical system includes two objectives facing each other, and the object holder is capable of positioning the specimen to be analyzed on the surface thereof oriented towards the optical system, while the laser sources for exciting a fluorescent radiation include at least two lasers having different wavelengths, the filter being a multi-layered one.

2. The device according to claim 1 **characterized in that** the filter is positioned between the means for fixing and the objective approximate thereto.

3. The device according to claim 1 **characterized in that** the filter is positioned between the objectives.

4. The device according to any one of claims 1 to 3 **characterized in that** the filter is interferential.

5. The device according to claim 1 **characterized in that** the means for fixing an image is designed to make a CCD or CMOS matrix.

6. The device according to claim 1 **characterized in that** the means for illuminating an object comprises a ring bearing comprising equally circumferentially spaced fiber ends of the fiber optical laser radiation distribution system angularly oriented to the axis of this ring bearing.

7. The device according to claim 6 **characterized in that** the ring bearing is mounted on an objective frame approximate to the objective holder.

8. The device according to any one of claim 6 or 7 **characterized in that** the fiber optical system includes a few fiber bundles, so that one bundle of fibers corresponds to each laser, each bundle being divided on the side faced the specimen holder into separate fibers, wherein the ends of fibers from different lasers are alternately positioned in a circumferential direction and directed towards an object to be analyzed when it is mounted in a holder.

9. The device according to claim 8 **characterized in that** the laser sources for exciting a fluorescent radiation comprises three lasers, two of them having the same wavelength.

10. The device according to claim 8 **characterized in that** the laser sources for exciting a fluorescent radiation comprises three lasers having different wavelengths.

11. The device according to claim 1 **characterized in that** the objectives are equal.

12. The device according to claim 1 **characterized in that** the specimen holder comprises three mutually perpendicular supporting planes and three elastic members to force the specimen against these planes, one of the supporting planes being positioned in the focal plane of the objective approximate to the objective holder.
